(19) Europäisches Patentamt

European Patent Office

Office européen des brevets

(11) **EP 1 130 439 B1**

(12) **EUROPÄISCHE PATENTSCHRIFT**

(45) Veröffentlichungstag und Bekanntmachung des Hinweises auf die Patenterteilung:
**11.08.2004   Patentblatt 2004/33**

(51) Int Cl.⁷: **G02B 21/00**, G02B 21/06

(21) Anmeldenummer: **01102466.8**

(22) Anmeldetag: **03.02.2001**

(54) **Verfahren und Vorrichtung zur Beleuchtung eines transparenten Objekts**

Method and apparatus for illuminating a transparent object

Méthode et dispositif d'illumination d'un objet transparent

(84) Benannte Vertragsstaaten:
**CH DE FR GB LI**

(30) Priorität: **03.03.2000   DE 10010154**

(43) Veröffentlichungstag der Anmeldung:
**05.09.2001   Patentblatt 2001/36**

(73) Patentinhaber: **Leica Microsystems Heidelberg GmbH**
**68165 Mannheim (DE)**

(72) Erfinder: **Bewersdorf, Jörg**
**69121 Heidelberg (DE)**

(74) Vertreter: **Reichert, Werner F., Dr.**
**Leica Microsystems AG,**
**Konzernstelle Patente + Marken,**
**Ernst-Leitz-Strasse 17-37**
**35578 Wetzlar (DE)**

(56) Entgegenhaltungen:
**EP-A- 0 491 289          WO-A-98/07059**
**DE-A- 4 326 473          DE-A- 4 331 570**
**DE-C- 19 851 240**

EP 1 130 439 B1

## Beschreibung

Die vorliegende Erfindung betrifft ein Verfahren zur Beleuchtung eines transparenten Objekts, insbesondere zur Anwendung in der doppelkonfokalen Rastermikroskopie, wobei zur Beleuchtung eines Punkts des Objekts zwei aus entgegengesetzten Richtungen auf den Punkt fokussierte Lichtwellen einer kohärenten Lichtquelle zu einem Beleuchtungsmuster interferieren.

Verfahren der gattungsbildenden Art werden insbesondere bei doppelkonfokalen Rastermikroskopen angewendet, wie sie beispielsweise aus der EP 0 491 289 A1 bekannt sind. Bei der doppelkonfokalen Rastermikroskopie wird Licht einer Lichtquelle in zwei Teilstrahlen aufgeteilt, wobei jeder Teilstrahl mit Hilfe eines Objektivs auf einen gemeinsamen Objektpunkt fokussiert wird. Die beiden Objektive sind hierbei auf verschiedenen Seiten der ihnen gemeinsamen Objektebene angeordnet. Im Objektpunkt bzw. an der Detektionslochblende bildet sich durch diese interferometrische Beleuchtung ein Interferenzmuster aus, dass bei konstruktiver Interferenz ein Hauptmaximum und mehrere Nebenmaxima aufweist. Die Nebenmaxima sind hierbei im Allgemeinen entlang der optischen Achse angeordnet. Mit einem doppelkonfokalen Rastermikroskop kann im Vergleich zum konventionellen Rastermikroskop durch die interferometrische Beleuchtung eine erhöhte axiale Auflösung erzielt werden.

Ein Bild eines mit einem doppelkonfokalen Rastermikroskop aufgenommenen Objekts weist hauptsächlich einen Beitrag auf, der von dem Hauptmaximum des Beleuchtungsmusters resultiert. Darüber hinaus sind dem Bild jedoch Anteile überlagert, die aus der Beleuchtung des Objekts mit den Nebenmaxima des Beleuchtungsmusters resultieren. Diese störenden Bildanteile können mit geeigneten Rekonstruktionsmethoden aus dem aufgenommenen Bild nachträglich entfernt werden. Hierbei werden in erster Linie Methoden der inversen Filterung angewendet, die in Form von Programmmodulen auf einem Computer implementiert sind. Die Rekonstruktionsmethoden können jedoch nur dann erfolgreich angewendet werden, wenn die Intensität der Nebenmaxima verglichen zur Intensität des Hauptmaximums des Beleuchtungsmusters deutlich kleiner als 50% ist. Falls diese Voraussetzung nicht erfüllt ist, ist entweder der Rauschanteil des rekonstruierten Bildes zu hoch oder die Beiträge der Nebenmaxima können nicht vollständig aus dem Bild entfernt werden, so dass "Geisterstrukturen" der aufgenommenen Objektstruktur im Bild verbleiben, Eine eindeutige Objektanalyse bzw. Bildinterpretation kann erschwert oder gar unmöglich gemacht werden.

Der vorliegenden Erfindung liegt daher die Aufgabe zugrunde, die Probleme der Rekonstruktionsmethoden ursächlich zu vermeiden.

Das erfindungsgemäße Verfahren der gattungsbildenden Art löst die voranstehende Aufgabe durch die Merkmale des Patentanspruchs 1. Danach ist ein solches Verfahren zur Beleuchtung eines transparenten Objekts dadurch gekennzeichnet, dass mindestens zwei zusätzliche, aufeinander zu laufende, kohärente Lichtwellen überlagert werden, um die Nebenmaxima des Beleuchtungsmusters zu minimieren.

Erfindungsgemäß ist zunächst erkannt worden, dass die Ergebnisse der Bildrekonstruktionsverfahren sich insbesondere dann verbessern lassen, wenn die Intensität der Nebenmaxima des Beleuchtungsmusters herabgesetzt werden kann. Zur Herabsetzung der Intensität der Nebenmaxima werden in erfindungsgemäßer Weise dem ursprünglichen doppelkonfokalen rastermikroskopischen Beleuchtungsmuster zusätzliche, aufeinander zu laufende, kohärente Lichtwellen überlagert, so dass das ursprüngliche Beleuchtungsmuster mit dem zusätzlichen Beleuchtungsmuster interferiert. Die so zu einem Gesamt-Beleuchtungsmuster interferierende elektromagnetische Feldverteilung weist bei geeigneter Überlagerung reduzierte Intensitäten der Nebenmaxima des ursprünglichen Beleuchtungsmusters auf, im Idealfall werden die Nebenmaxima sogar ausgelöscht. Dies hat zur Folge, dass das resultierende Bild in vorteilhafter Weise eine eindeutige Objektanalyse ermöglicht, im Idealfall auch sogar auf die Anwendung von Rekonstruktionsmethoden verzichtet werden kann.

Aufgrund fundamentaler Eigenschaften der elektromagnetischen Wellen ist eine Voraussetzung zur Minimierung der Nebenmaxima des Beleuchtungsmusters, dass die zusätzlichen Lichtwellen kohärent zu den Lichtwellen sind, die das ursprüngliche Beleuchtungsmuster erzeugen. Weiterhin müssen die zusätzlichen Lichtwellen jeweils aufeinander zu laufen, so dass die zusätzlichen Lichtwellen für sich gesehen ebenfalls ein Interferenzmuster ausbilden, das dem ursprünglichen Beleuchtungsmuster überlagerbar ist. Nur wenn die zusätzlichen Lichtwellen ihrerseits interferieren können weist das zusätzliche Beleuchtungsmuster eine Beleuchtungsstruktur auf, die ein zum ursprünglichen Beleuchtungsmuster vergleichbares Auflösungsniveau hat.

In einer besonders vorteilhaften Ausführungsform ist die Phasenbeziehung zwischen dem Beleuchtungsmuster und den zusätzlichen Lichtwellen einstellbar. Hierbei könnte die Phasenbeziehung zwischen dem ursprünglichen Beleuchtungsmuster und sämtlichen zusätzlichen überlagerten Lichtwellen eingestellt werden. Dementsprechend kann das durch die zusätzlichen überlagerten Lichtwellen erzeugte zusätzliche Beleuchtungsmuster in seiner Gesamtheit relativ zum ursprünglichen Beleuchtungsmuster verändert werden. Darüber hinaus könnte auch lediglich die Phasenbeziehung zwischen den zusätzlichen Lichtwellen untereinander verändert werden, wodurch sich lediglich das dem ursprünglichen Beleuchtungsmuster überlagerte zusätzliche Beleuchtungsmuster verändert. Hierdurch wäre eine alternative Veränderung des Gesamt-Beleuchtungsmusters erzielbar.

Wenn die elektromagnetische Feldstärke am Ort eines Nebenmaximums des ursprünglichen Beleuchtungsmusters entgegengesetzt zur elektromagnetischen Feldstärke des zusätzlich überlagerten Beleuchtungsmusters ist, kann in vorteilhafter Weise die resultierende Beleuchtungsintensität reduziert werden. Idealerweise wird man versuchen, diese Bedingung für alle Nebenmaxima des ursprünglichen Beleuchtungsmusters zu erzielen. Die so überlagerten Beleuchtungsmuster weisen unterschiedliche Vorzeichen auf und können somit reduziert und im Idealfall ausgelöscht werden.

Die Nebenmaxima des ursprünglichen Beleuchtungsmusters lassen sich in besonders vorteilhafter Weise dann auslöschen, wenn die elektromagnetische Feldstärke des Beleuchtungsmusters am Ort der Nebenmaxima dem Betrag nach der elektromagnetischen Feldstärke der überlagerten Lichtwellen entspricht, vorausgesetzt, die elektromagnetische Feldstärke des ursprünglichen Beleuchtungsmusters und die elektromagnetische Feldstärke des zusätzlich überlagerten Beleuchtungsmusters weisen am Ort der Nebenmaxima unterschiedliche Vorzeichen auf. Demgemäß ist schon eine erhebliche Reduzierung der Intensität der Nebenmaxima dann möglich, wenn die elektromagnetische Feldstärke des Beleuchtungsmusters am Ort der Nebenmaxima dem Betrag nach ungefähr der elektromagnetischen Feldstärke der überlagerten Lichtwellen entspricht. Durch die geeignete Wahl der Intensität der zusätzlich überlagerten Lichtwellen lassen sich die elektromagnetischen Feldstärken der überlagerten Lichtwellen einstellen. Im Allgemeinen wird hierzu die Intensität der zusätzlichen Lichtwellen geringer oder größer als die Intensität der zur Beleuchtung dienenden Lichtwellen gewählt. Es kann jedoch von ganz besonderem Vorteil sein, wenn die Intensität der zusätzlichen Lichtwellen gleich der der zur Beleuchtung dienenden Lichtwellen gewählt wird.

Es unterscheiden sich im wesentlichen mehrere Varianten zur Minimierung der Nebenmaxima des ursprünglichen Beleuchtungsmusters. Allen Varianten ist gemeinsam, dass die ursprüngliche Beleuchtung eines Punkts des Objekts aus zwei entgegengesetzten Richtungen erfolgt, wobei die hierzu verwendeten kohärenten Lichtwellen auf einen gemeinsamen Punkt fokussiert werden.

Die erste Variante sieht vor, dass die zusätzlichen, aufeinander zu laufenden, kohärenten Lichtwellen im Objektbereich kollimiert verlaufen.

Die zweite Variante sieht vor, dass die zusätzlich kohärent überlagerten Lichtwellen im Objektbereich auf einen Punkt fokussiert werden.

Die dritte Variante sieht eine zeitliche Modulation der Intensität des Lichts zur Erzeugung des ursprünglichen Beleuchtungsmusters und/oder der Intensität der zusätzlich überlagerten Lichtwellen vor. Hierbei ist es denkbar, dass die zusätzlich überlagerten Lichtwellen im Objektbereich entweder kollimiert oder auf einen Punkt fokussiert werden.

Bei der ersten Variante verlaufen die zusätzlich kohärent überlagerten Lichtwellen im Objektbereich kollimiert, d. h. die aufeinander zu laufenden Lichtwellen weisen im Objektbereich eine parallele Strahlform auf. Durch die Überlagerung dieser Lichtwellen ergibt sich ein zusätzliches Beleuchtungsmuster, das dem ursprünglichen Beleuchtungsmuster überlagerbar ist. Dieses zusätzliche Beleuchtungsmuster weist abwechselnd Maxima und Minima auf, die jeweils in einer Ebene liegen, die senkrecht zur optischen Achse steht. Der Abstand zweier benachbarter Maxima dieses zusätzlichen Beleuchtungsmusters läßt sich durch Variation des Kreuzungswinkels zweier aufeinander zu laufender Lichtwellen einstellen. Hierbei ist der Abstand zweier benachbarter Maxima minimal, wenn zwei Lichtwellen genau entgegengesetzt verlaufen, also wenn der Kreuzungswinkel 0 bzw. 180 Grad beträgt.

Durch die Einstellung des Kreuzungswinkels zweier kollimiert verlaufender Lichtwellen kann ein zusätzliches Beleuchtungsmuster derart erzeugt werden, dass mindestens ein Maximum des zusätzlichen Beleuchtungsmusters sich mit mindestens einem Nebenmaximum des ursprünglichen Beleuchtungsmusters zumindest weitgehend überlagern läßt. Idealerweise wird hierbei die elektromagnetische Feldstärke der zusätzlichen Beleuchtungsmuster derart gewählt, dass diese am Ort der Nebenmaxima des ursprünglichen Beleuchtungsmusters ein unterschiedliches Vorzeichen aufweist und darüber hinaus dem Betrag nach zumindest ungefähr gleich sind. Hierdurch können die Nebenmaxima des ursprünglichen Beleuchtungsmusters ausgelöscht werden.

In besonders vorteilhafter Weise wird das zusätzliche Beleuchtungsmuster derart ausgebildet, dass zwei benachbarte Maxima des zusätzlichen Beleuchtungsmusters sich mit den beiden dem Hauptmaximum benachbarten Nebenmaxima des ursprünglichen Beleuchtungsmusters zumindest weitgehend überlagern lassen. Somit weist das zusätzliche Beleuchtungsmuster einen Abstand zweier benachbarter Maxima auf, der gleich dem Abstand der beiden dem Hauptmaximum benachbarten Nebenmaxima des ursprünglichen Beleuchtungsmusters entspricht. Hierdurch können in besonders vorteilhafter Weise lediglich die beiden Nebenmaxima des ursprünglichen Beleuchtungsmusters reduziert bzw. ausgelöscht werden, die die größte Intensität aufweisen und somit den größten Störbeitrag liefern.

Die zweite Variante ist durch die Fokussierung der zusätzlich kohärent überlagerten Lichtwellen auf einen gemeinsamen Punkt im Objektbereich gekennzeichnet. Hierbei werden jeweils zwei aufeinander zu laufende kohärente Lichtwellen auf einen gemeinsamen Punkt fokussiert.

In besonders vorteilhafter Weise könnte das ursprüngliche Beleuchtungsmuster relativ zum Beleuchtungsmuster der zusätzlich überlagerten Lichtwellen derart versetzt sein, dass lediglich deren Nebenmaxima zumindest weitgehend überlagert sind. Bei diesem Versatz wird es sich im Allgemeinen um einen axialen Versatz, also entlang der optischen Achse, handeln. Idealerweise könnte das erste Nebenmaximum des ursprünglichen Beleuchtungsmusters mit dem ersten Nebenmaximum des Beleuchtungsmusters der zusätzlich überlagerten Lichtwellen überlagert werden. Dementsprechend wäre das Hauptmaximum des ursprünglichen Beleuchtungsmusters zu dem Hauptmaximum des zusätzlichen Beleuchtungsmusters in Richtung der optischen Achse versetzt.

Alternativ hierzu könnten die beiden Beleuchtungsmuster auch derart versetzt sein, dass das Hauptmaximum des Beleuchtungsmusters der zusätzlich überlagerten Lichtwellen sich mit einem Nebenmaximum des ursprünglichen Beleuchtungsmusters zumindest weitgehend überlagern läßt. Hierbei könnte das Hauptmaximum des Beleuchtungsmusters der zusätzlich überlagerten Lichtwellen einem dem Hauptmaximum benachbarten Nebenmaximum des ursprünglichen Beleuchtungsmusters überlagert werden.

Im Idealfall ist für jedes Nebenmaximum des ursprünglichen Beleuchtungsmusters jeweils ein zusätzliches Beleuchtungsmuster vorgesehen, das jeweils mit Hilfe von zusätzlich überlagerten Lichtwellen erzeugt wird. Auch hierfür ist vorgesehen, dass die Phasenlage bzw. die elektromagnetische Feldstärke zumindest am Ort der dem Hauptmaximum benachbarten Nebenmaxima des ursprünglichen Beleuchtungsmusters derart eingestellt wird, dass vor allem diese Nebenmaxima minimiert bzw. ausgelöscht werden.

Die Überlagerung der zusätzlichen kohärenten Lichtwellen könnte durch eine Modulation und/oder Filterung in mindestens einer Fourierebene des Beleuchtungsstrahlengangs erzeugt werden. Die Modulation und/oder Filterung könnte mit einer Phasenplatte und/oder einer Amplitudenplatte erfolgen. Hierzu könnte beispielsweise eine entsprechende Phasen- bzw. Amplitudenplatte in einer Fourierebene im gemeinsamen Beleuchtungsstrahlengang angeordnet werden. Die Anordnung zweier Phasen- bzw. Amplitudenplatten in jeweils einer Fourierebene des aufgeteilten, doppelkonfokalen Rastermikroskop-Strahlengangs wäre ebenfalls denkbar.

Die Phasen- und/oder Amplitudenplatte könnte lediglich auf einen Teil bzw. Ausschnitt des Beleuchtungsstrahls wirken, eine Wirkung auf den gesamten Beleuchtungsstrahl wäre ebenfalls denkbar. Eine solche Phasen- und/oder Amplitudenplatte könnte in Form eines λ/4-Plättchens, einer zumindest teilweise als Grauwertfilter ausgestaltete Platte oder als eine teilweise verspiegelte Platte ausgeführt sein.

Die dritte Variante sieht vor, dass die Intensität des Lichts zur Erzeugung des ursprünglichen Beleuchtungsmusters und/oder die Intensität der zusätzlich überlagerten Lichtwellen zeitlich moduliert werden. Diese Variante ist besonders vorteilhaft bei der Detektion von Objekten, die mit Fluoreszenzmarker markiert sind. In besonders bevorzugter Weise ist die Intensität des Lichts zur Erzeugung des ursprünglichen Beleuchtungsmusters und die Intensität der zusätzlich überlagerten Lichtwellen zeitlich moduliert. Die Intensitätsmodulationen könnten darüber hinaus zueinander zeitlich versetzt sein. Zur Optimierung der jeweiligen Beleuchtungsbedingungen könnte der zeitliche Versatz einstellbar sein.

Die Intensitätsmodulation könnte eine Rechteck,- Sägezahn-, Dreieckoder Pulsform aufweisen. Alternativ hierzu könnte eine Lichtquelle verwendet werden, die gepulstes Licht emittiert, so dass hierdurch eine Intensitätsmodulation des Beleuchtungslichts gegeben ist.

Es ist vorgesehen, die Intensitätsmodulation des Lichts zur Erzeugung des ursprünglichen Beleuchtungsmusters und/oder die Intensitätsmodulation der zusätzlich überlagerten Lichtwellen mit dem Detektorsystem zu synchronisieren. So könnte beispielsweise der Detektor nur in vorgegebenen bzw. von der zeitlichen Intensitätsmodulation abhängigen Zeitintervallen Objektlicht detektieren bzw. an das Auswertesystem des doppelkonfokalen Rastermikroskops weitergeben.

Sämtliche Varianten könnten zur Anregung von mit Fluoreszenzmarker markierten Objekten dienen. Hierbei könnte die Fluoreszenzanregung mit Einphotonen- und/oder Mehrphotonen-Anregung erfolgen. Insbesondere bei der Einphotonen-Anregung sind Vorkehrungen zu treffen, die ein frühzeitiges Ausbleichen der verwendeten Fluoreszenzmarker weitgehend verhindern, da diese während der Beleuchtung des Gesamt-Beleuchtungsmusters vermehrt mit Licht beaufschlagt werden. In besonders vorteilhafter Weise könnten fluoreszierende Nano-Kristalle als Fluoreszenzmarker eingesetzt werden, da diese so gut wie nicht ausbleichen.

In vorrichtungsmäßiger Hinsicht wird die eingangs genannte Aufgabe durch die Merkmale des Patentanspruchs 10, insbesondere zur Anwendung des Verfahrens nach einem der Ansprüche 1 bis 9 gelöst. Danach ist eine solche Vorrichtung zur Beleuchtung eines transparenten Objekts dadurch gekennzeichnet, dass mindestens zwei zusätzliche, aufeinander zu laufende, kohärente Lichtwellen überlagerbar sind, um die Nebenmaxima des Beleuchtungsmusters zu minimieren.

Die zusätzlichen kohärenten Lichtwellen werden bei der Vorrichtung durch eine Strahlaufteilung des von der Lichtquelle emittierten Lichts erzeugt. Diese Strahlaufteilung wird mit Hilfe einer optischen Einrichtung realisiert, die das von der Lichtquelle kommende Licht zumindest zu einem Teil transmittieren, zu einem anderen Teil reflektieren läßt, wobei der reflektierte Anteil dem transmittierten Anteil wieder überlagert wird. Eine Mehrfachreflexion in der optischen Einrichtung ist ebenfalls denkbar. Vorzugsweise ist die optische Einrichtung im divergent verlaufenden Beleuchtungsstrahlengang angeordnet.

In einer konkreten Ausführungsform ist die optische Einrichtung als Reflexionsplatte ausgebildet. Hierbei könnte es sich um eine Glasplatte handeln, die quaderförmig ausgebildet und deren Oberfläche senkrecht zur optischen Achse ausgerichtet ist. Das von der Lichtquelle kommende Licht passiert die Reflexionsplatte, ein Teil davon wird aufgrund interner Reflexion zweimal reflektiert, bevor dieser Anteil des Lichts die Reflexionsplatte verläßt. Die mehrfach reflektierten Anteile des Lichts werden hierbei als zusätzliche kohärente Lichtwellen dem transmittierten Anteil des Lichts überlagert.

In besonders vorteilhafter Weise weist die Reflexionsplatte zwei zusammengesetzte, keilförmige optische Bauteile auf. Diese beiden Bauteile könnten gegeneinander quer zur optischen Achse verschoben werden, wodurch die Dicke der resultierenden Platte eingestellt werden kann. Wenn der Keilwinkel der beiden Bauteile gering ist, d.h. die eine Oberfläche des Bauteils eine sehr geringe Neigung gegenüber der anderen Oberfläche des Bauteils hat, kann die Dicke der resultierenden Platte sehr empfindlich variiert werden. Die beiden optischen Bauteile könnten zwischen den ihnen zugewandten Seiten mit einem optischen Medium, beispielsweise Immersionsöl mit angepaßtem Brechungsindex, versehen sein.

Abhängig von dem notwendigen axialen Versatz des ursprünglichen Beleuchtungsmusters zu den zusätzlich überlagerten Beleuchtungsmustern ist die Dicke der Reflexionsplatte zu dimensionieren. Wenn bei dem doppelkonfokalen Rastermikroskop herkömmliche Mikroskopobjektive verwendet werden, hängt der axiale Versatz δz mit der Dicke Z der Reflexionsplatte und der Vergrößerung M der Mikroskopobjektive wie folgt zusammen:

$$Z=0.5*M^2*\delta z$$

Zur Einstellung des erforderlichen Intensitätsverhältnisses der einzelnen Lichtwellen weist die optische Einrichtung eine entsprechende Beschichtung auf. Durch die Beschichtung kann das Transmissions- bzw. Reflexionsvermögen der optisch wirksamen Oberflächen der Reflexionsplatte eingestellt werden. Idealerweise weist das mehrfach reflektierte Licht verglichen zum direkt transmittierten Licht ein Intensitätsverhältnis auf, so dass die elektromagnetische Feldstärke des Beleuchtungsmusters am Ort der Nebenmaxima dem Betrag nach zumindest ungefähr der elektromagnetischen Feldstärke der überlagerten Lichtwellen entspricht.

In einer alternativen Ausführungsform könnte die optische Einrichtung Strahlteilerplatten und Spiegel aufweisen. Die Strahlteilerplatten der optischen Einrichtung weisen eine Beschichtung auf, die das erforderliche Intensitätsverhältnis der Lichtwellen erzeugen. Letztendlich kann das erforderliche Intensitätsverhältnis der ursprünglichen Lichtwellen zu den überlagerten Lichtwellen durch geeignete Beschichtung der Strahlteilerplatten eingestellt werden. Die das Transmissions- bzw. Reflexionsvermögen charakterisierende Beschichtung der Strahlteilerplatten könnte für jede Strahlteilerplatte der optischen Einrichtung individuell unterschiedlich ausgeführt sein.

In besonders vorteilhafter Weise kann durch entsprechende Positionierung einzelner Bauteile der optischen Einrichtung ein zeitlicher Versatz der intensitätsmodulierten Lichtwellen eingestellt werden. Insbesondere wenn es sich um eine gepulste Lichtwelle handelt kann der zeitliche Versatz des ohne Reflexion durchlaufenden Lichtstrahls zu dem einfach bzw. mehrfach reflektierten Lichtstrahl durch den zusätzlichen optischen Weg der optischen Einrichtung entsprechend eingestellt werden.

Die gesamte optische Einrichtung könnte in lateraler und/oder axialer Richtung relativ zum Beleuchtungsstrahlengang verstellbar angeordnet sein. Durch Veränderung der Position der optischen Einrichtung kann das zusätzliche Beleuchtungsmuster lateral und/oder axial zu dem ursprünglichen Beleuchtungsmuster versetzt werden. Darüber hinaus könnten auch einzelne Komponenten bzw. Bauteile der optischen Einrichtung lateral und/oder axial verstellt werden. Hierdurch kann in erster Linie das zusätzliche Beleuchtungsmuster in seiner räumlichen Struktur variiert werden bzw. der zeitliche Versatz von intensitätsmodulierten Lichtwellen könnte über eine Laufzeitdifferenz eingestellt werden.

Es gibt nun verschiedene Möglichkeiten, die Lehre der vorliegenden Erfindung in vorteilhafter Weise auszugestalten und weiterzubilden. Dazu ist einerseits auf die den Patentansprüchen 1 und 10 nachgeordneten Patentansprüche und andererseits auf die nachfolgende Erläuterung der bevorzugten Ausführungsbeispiele der Erfindung anhand der Zeichnung zu verweisen. In Verbindung mit der Erläuterung der bevorzugten Ausführungsbeispiele der Erfindung anhand der Zeichnung werden auch im allgemeinen bevorzugte Ausgestaltungen und Weiterbildungen der Lehre erläutert. In der Zeichnung zeigen

Fig. 1 eine schematische Darstellung eines Strahlengangs eines doppelkonfokalen Rastermikroskops,

Fig. 2A in einem Diagramm die elektromagnetische Feldstärke des ursprünglichen Beleuchtungsmusters als Funktion der optischen Achse,

Fig. 2B in einem Diagramm die elektromagnetische Feldstärke eines ersten zusätzlichen Beleuchtungsmusters als Funktion der optischen Achse,

Fig. 2C in einem Diagramm die elektromagnetische Feldstärke eines weiteren, zusätzlichen überlagerten Beleuchtungsmusters als Funktion der optischen Achse,

Fig. 2D    in einem Diagramm die resultierende elektromagnetische Feldverteilung als Funktion der optischen Achse,

Fig. 3    eine schematische Darstellung einer als Reflexionsplatte ausgeführten optischen Einrichtung und

Fig. 4    in einer schematischen Darstellung eine aus Strahlteiler und Spiegel ausgeführte optische Einrichtung.

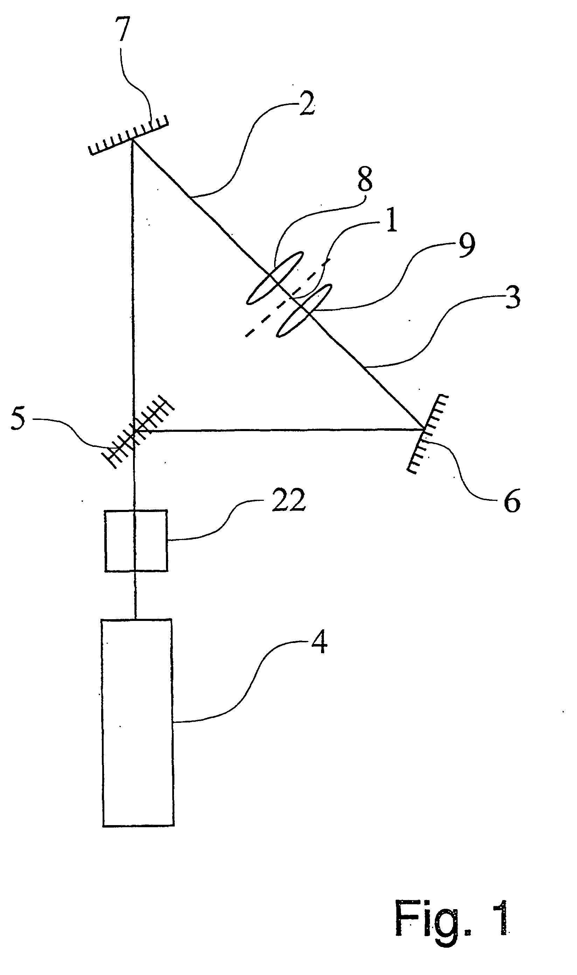

Die Fig. 1 zeigt eine Vorrichtung zur Durchführung eines Verfahrens zur Beleuchtung eines transparenten Objekts 1 mit einem doppelkonfokalen Rastermikroskop, wobei zur Beleuchtung eines Punkts des Objekts 1 zwei aus entgegengesetzten Richtungen 2, 3 auf den Punkt fokussierte Lichtwellen einer kohärenten Lichtquelle 4 zu einem Beleuchtungsmuster interferieren. Die beiden Lichtwellen werden mit Hilfe eines Strahlteilers 5 in zwei Teilstrahlen aufgeteilt, die jeweils von einem Spiegel 6, 7 derart reflektiert werden, dass sie aus entgegengesetzten Richtungen jeweils die Objektive 8, 9 durchlaufen. Die Objektive 8, 9 fokussieren die beiden aufgeteilten Lichtwellen auf einen gemeinsamen Punkt. In diesem gemeinsamen Punkt bildet sich das Beleuchtungsmuster des doppelkonfokalen Rastermikroskops aus und beleuchtet so ein zwischen den beiden Objektiven 8, 9 eingebrachtes transparentes Objekt.

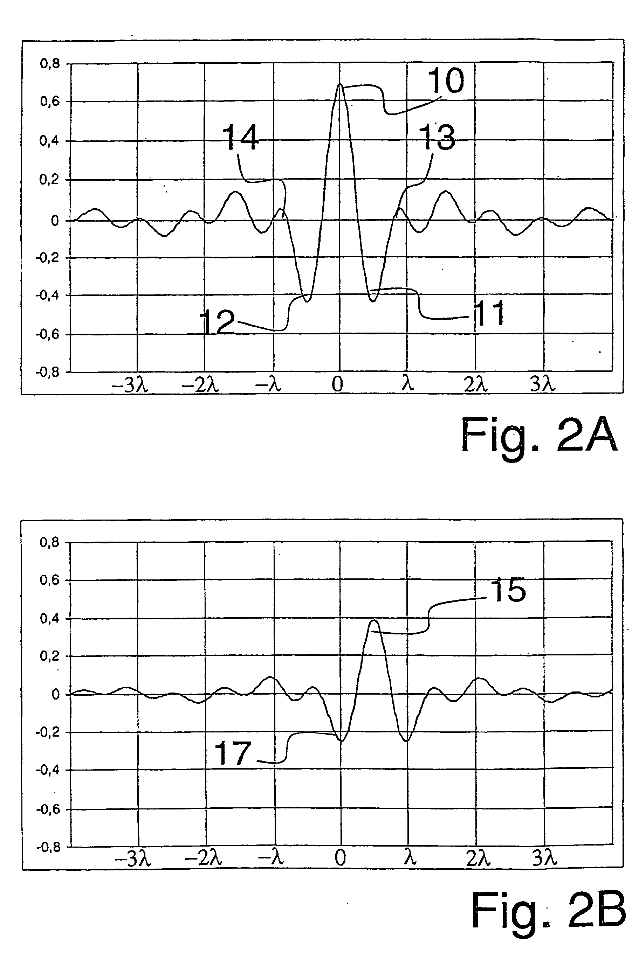

Im folgenden wird zur beispielhaften Erläuterung der zweiten Variante des erfindungsgemäßen Verfahrens auf die Fig. 2A bis 2D verwiesen. In den dort gezeigten Diagrammen ist auf der Abszisse die Ortskoordinate in Richtung der optischen Achse aufgetragen, auf der Ordinate ist die elektromagnetische Feldstärke aufgetragen. Die Abszissen der in den Figuren 2A bis 2D gezeigten Diagramme weisen die gleiche Skalierung auf und erstrecken sich über den gleichen Bereich, der in Einheiten der Wellenlänge des Beleuchtungslichts eingezeichnet ist.

Die Fig. 2A zeigt die elektromagnetische Feldstärke eines typischen Beleuchtungsmusters bei der doppelkonfokalen Rastermikroskopie an der Lateralkoordinate des Fokuspunkts entlang der optischen Achse. Das Beleuchtungsmuster ist symmetrisch zur Fokalebene ausgebildet.

Die Fokalebene hat in diesem Diagramm die Abszissen-Koordinate 0. Das Hauptmaximum 10 des Beleuchtungsmusters hat ebenfalls die Abszissen-Koordinate 0. Die nächsten Nebenmaxima 11, 12 sind ungefähr eine halbe Wellenlänge von dem Hauptmaximum entfernt angeordnet, wobei in dem in Fig. 2A gezeigten Diagramm die elektromagnetische Feldstärke am Ort der beiden Nebenmaxima 11, 12 einen negativen Wert aufweist. Die Nebenmaxima 13, 14 sind ungefähr eine Wellenlänge von der Fokusebene entfernt. Die Intensitätsverteilung des Beleuchtungsmusters der in der Fig. 2A gezeigten elektromagnetischen Feldstärke ist durch das Bilden des Betragsquadrats dieser Kurvenform gegeben.

Erfindungsgemäß wird dem in der Fig. 2A gezeigten Beleuchtungsmuster ein zusätzliches Beleuchtungsmuster überlagert. Dieses zusätzliche Beleuchtungsmuster wird aus zwei zusätzlichen, aufeinander zu laufenden, kohärenten Lichtwellen erzeugt. Die elektromagnetische Feldverteilung des zusätzlichen Beleuchtungsmusters ist in der Fig. 2B gezeigt. Die Phasenbeziehung zwischen dem ursprünglichen Beleuchtungsmuster und dem zusätzlichen Beleuchtungsmuster bzw. deren Lichtwellen wurde derart eingestellt, dass die elektromagnetische Feldstärken der Beleuchtungsmuster entgegengesetzt ausgebildet sind. Im Konkreten weist die elektromagnetische Feldstärke am Ort des Nebenmaximums 11 einen aus der Fig. 2A entnehmbaren Wert von ungefähr -0,4 auf. Demgegenüber weist das Hauptmaximum 15 des zusätzlichen Beleuchtungsmusters am Ort des Nebenmaximums 11 eine elektromagnetische Feldstärke auf, die einen der Fig. 2B entnehmbaren Wert von ungefähr 0,4 entspricht. Somit sind die elektromagnetischen Feldstärken der überlagerten Beleuchtungsmuster am Ort des Nebenmaximums 11 dem Betrag nach zumindest ungefähr gleich.

Das in der Fig. 2B gezeigte zusätzliche Beleuchtungsmuster ist relativ zu dem in der Fig. 2A gezeigten ursprünglichen Beleuchtungsmuster derart versetzt, dass das Hauptmaximum 15 des zusätzlichen Beleuchtungsmusters dem Nebenmaximum 11 des ursprünglichen Beleuchtungsmusters überlagert ist. Das Nebenmaximum 17 des zusätzlichen Beleuchtungsmusters hat die Abszissen-Koordinate 0.

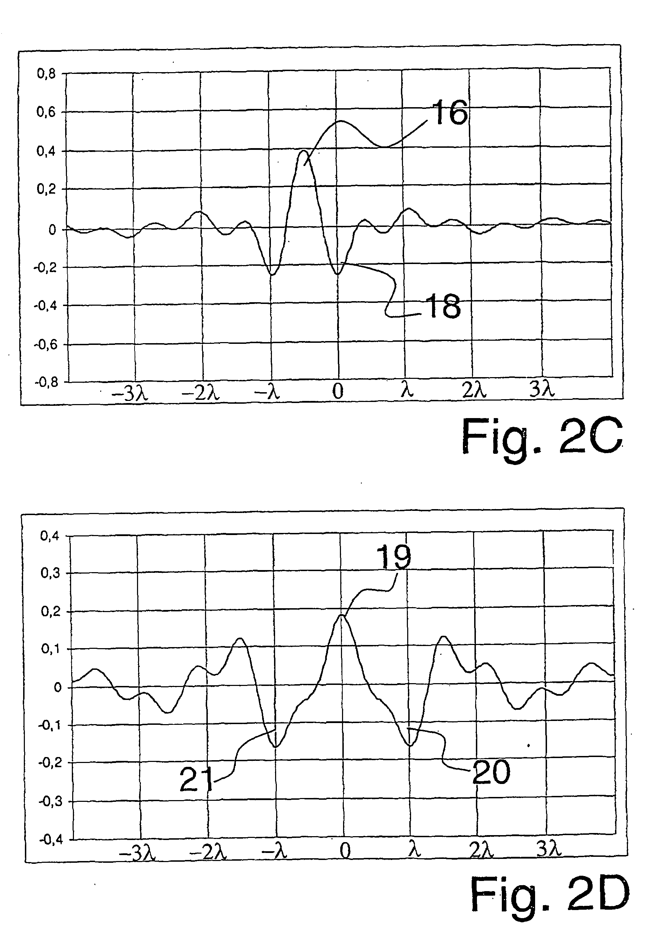

In der Fig. 2C ist ein weiteres Beleuchtungsmuster gezeigt, das den beiden in der Fig. 2A und 2B gezeigten Beleuchtungsmustern überlagert wird. Das Beleuchtungsmuster aus der Fig. 2C weist ein Hauptmaximum 16 auf, das am Ort des Nebenmaximums 12 des ursprünglichen Beleuchtungsmusters angeordnet ist. Das Nebenmaximum 18 des zusätzlichen Beleuchtungsmusters hat ebenfalls die Abszissen-Koordinate 0. Somit wird für jedes der beiden Nebenmaxima 11, 12 des ursprünglichen Beleuchtungsmusters jeweils ein zusätzliches Beleuchtungsmuster mit Hilfe von zusätzlich überlagerten Lichtwellen erzeugt.

In Fig. 2D ist die elektromagnetische Feldstärke der drei überlagerten Beleuchtungsmuster dargestellt. Das resultierende Beleuchtungsmuster weist am Ort der Fokalebene ein Hauptmaximum 19 auf. Dem Hauptmaximum 19 sind zwei weitere Maxima 20, 21 benachbart. Die weiteren Maxima 20, 21 sind jedoch weiter von der Fokalebene entfernt, nämlich ungefähr eine Wellenlänge des verwendeten Lichts. Da mit einem doppelkonfokalen Rastermikroskop in axialer Richtung jedoch lediglich der Bereich von ungefähr $\pm \lambda/2$ um die Fokalebene detektiert wird, können die Beiträge der zusätzlichen Maxima 20, 21 durch das Detektionspinhole ausgeblendet werden. Das Hauptmaximum 19 des resultierenden Beleuchtungsmusters weist ungefähr die gleiche Breite wie das Hauptmaximum 10 des ursprünglichen Beleuchtungsmusters auf. Demgemäß liefert diese Variante eine axiale Auflösung, die in dieser Weise ohne störende Beiträge der Nebenmaxima 11, 12 nicht realisierbar wäre.

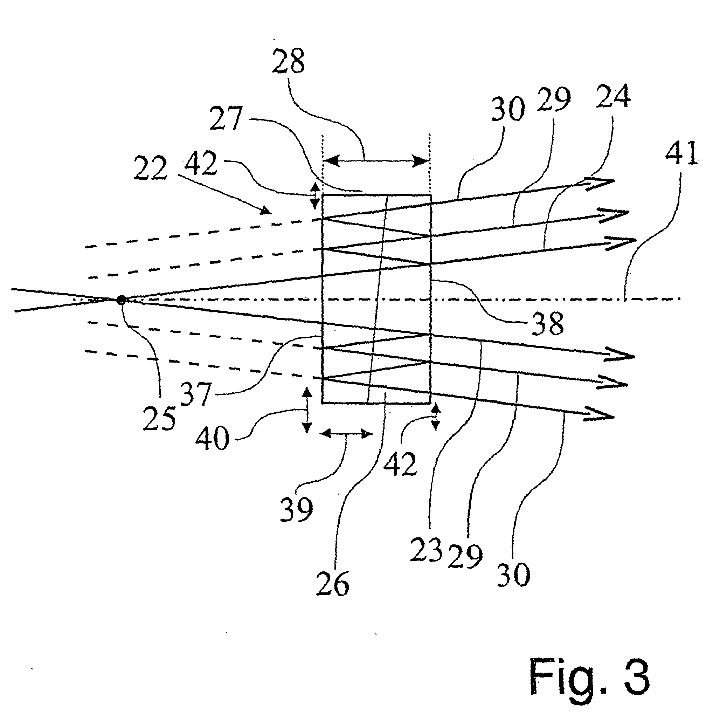

Im Hinblick auf eine vorrichtungsmäßige Ausführungsform werden die zusätzlich aufeinander zu laufenden, kohärenten Lichtwellen mit Hilfe einer in der Fig. 1 gezeigten optischen Einrichtung 22 erzeugt. Die Fig. 3 zeigt ein erstes Ausführungsbeispiel einer optischen Einrichtung 22, die die zusätzlichen kohärenten Lichtwellen durch Strahlaufteilung des von der Lichtquelle 4 emittierten Lichts erzeugt. Hierbei wird mit der optischen Einrichtung 22 die Strahlaufteilung durch eine Kombination von Transmission und Mehrfachreflexion erzeugt. Durch entsprechende Dimensionierung der Bauteile bzw. durch Anordnung von Blenden können Mehrfachreflexionen höherer Ordnung vermieden werden. Die optische Einrichtung 22 ist im divergent verlaufenden Beleuchtungsstrahlengang angeordnet. In der Fig. 3 ist angedeutet, dass die ursprünglichen Lichtstrahlen 23, 24 von dem Fokuspunkt 25 divergieren. Die beiden Lichtstrahlen 23, 24 zeigen die äußeren bzw. umhüllenden Strahlen des von der Lichtquelle emittierten Lichts. Die optische Einrichtung 22 ist als Reflexionsplatte ausgebildet, die aus zwei zusammengesetzten, keilförmigen optischen Bauteilen 26, 27 besteht. Zwischen den beiden keilförmigen Reflexionsplatten 26, 27 ist ein Immersionsöl eingebracht, das einen Brechungsindex aufweist, der dem der beiden Reflexionsplatten 26, 27 entspricht. Die optischen Bauteile 26, 27 sind gegeneinander verschiebbar angeordnet, so dass die wirksame Dicke 28 der Reflexionsplatte einstellbar ist. Die zusätzlichen Lichtwellen 29, 30 werden durch interne Reflexion in der zusammengesetzten Reflexionsplatte erzeugt.

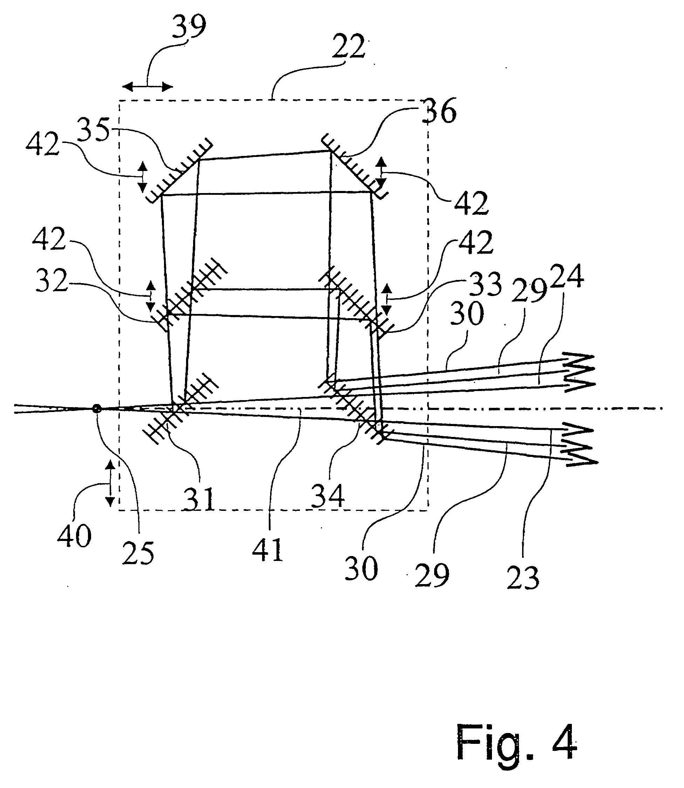

Die Fig. 4 zeigt eine alternative Ausführungsform einer optischen Einrichtung 22, die aus Strahlteiler 31, 32, 33, 34 und Spiegel 35, 36 besteht. Auch diese optische Anordnung ist im divergent verlaufenden Strahlengang angeordnet. Die von dem Fokuspunkt 25 divergent verlaufenden Lichtstrahlen 23, 24 werden zu einem Teil vom ersten Strahlteiler 31 reflektiert, zu einem anderen Teil passieren sie diesen. Der reflektierte Anteil trifft auf den Strahlteiler 32, der wiederum einen Teil der Lichtstrahlen reflektiert bzw. transmittieren läßt. Der transmittierte Anteil wird seinerseits von den Spiegeln 35 und 36 reflektiert. Der Strahlteiler 33 vereinigt zwei Lichtstrahlen, nämlich den reflektierten Anteil des Strahlteilers 32 und den von dem Spiegel 36 kommenden Lichtstrahl. Die vereinigten Lichtstrahlen werden mit Hilfe des Strahlteilers 34 dem transmittierten Anteil des Strahlteilers 31 überlagert.

Die Strahlteiler 31, 32, 33, 34 weisen eine Beschichtung auf, die das erforderliche Intensitätsverhältnis der zu überlagernden Lichtwellen erzeugt. Gleiches gilt für die beiden Oberflächen 37, 38 der zusammengesetzten Reflexionsplatte 26, 27 aus der Fig. 3.

Die optischen Einrichtungen aus den Fig. 3 und 4 können als Ganzes entlang den Richtungen 39 und 40 relativ zum Beleuchtungsstrahlengang bzw. der optischen Achse 41 verstellt werden. Durch eine Verstellung der gesamten optischen Einrichtung 22 entlang der Richtung 39 kann der axiale Versatz der zusätzlich überlagerten Beleuchtungsmuster verändert werden.

Die beiden keilförmigen Bauteile 26, 27 der in der Fig. 3 gezeigten Reflexionsplatte sind gegeneinander entlang der Richtung 42 verschiebbar angeordnet. Auch die Teile der optischen Einrichtung 22 aus der Fig. 4 können entlang der Richtung 42 verstellt werden. Hierbei ist vorgesehen, dass entweder die beiden Spiegel 35, 36 oder die beiden Strahlteilerplatten 32, 33 paarweise entlang der Richtung 42 verstellt werden. Hierdurch kann in besonders vorteilhafter Weise die Laufzeitdifferenz der zusätzlich überlagerten Lichtwellen bei der dritten Variante entsprechend eingestellt werden.

**Bezugszeichenliste**

| | |
|---|---|
| 1 | Objekt |
| 2 | Teilstrahl aus einer Richtung |
| 3 | Teilstrahl aus der entgegengesetzten Richtung |
| 4 | Lichtwelle |
| 5 | Strahlteiler |
| 6 | Spiegel |
| 7 | Spiegel |
| 8 | Objektiv |
| 9 | Objektiv |
| 10 | Hauptmaximum vom ursprünglichen Beleuchtungsmuster |
| 11 | erstes Nebenmaximum zu (10) |
| 12 | erstes Nebenmaximum zu (10) |
| 13 | zweites Nebenmaximum zu (10) |
| 14 | zweites Nebenmaximum zu (10) |
| 15 | Hauptmaximum vom zusätzlichen Beleuchtungsmuster |
| 16 | Hauptmaximum vom zweiten zusätzlichen Beleuchtungsmusters |
| 17 | Nebenmaximum zu (15) |
| 18 | Nebenmaximum zu (17) |
| 19 | Hauptmaximum vom resultierenden Beleuchtungsmuster |
| 20 | Nebenmaximum zu (19) |
| 21 | Nebenmaximum zu (19) |
| 22 | optische Einheit |
| 23 | ursprüngliche Lichtstrahlen |
| 24 | ursprüngliche Lichtstrahlen |
| 25 | Fokuspunkt |
| 26 | keilförmige Reflexionsplatten |
| 27 | keilförmige Reflexionsplatten |

28      Dicke von (26, 27)
29      zusätzliche Lichtwellen
30      zusätzliche Lichtwellen
31      Strahlteiler von (22)
32      Strahlteiler von (22)
33      Strahlteiler von (22)
34      Strahlteiler von (22)
35      Spiegel von (22)
36      Spiegel von (22)
37      Oberfläche von (26, 27)
38      Oberfläche von (26, 27)
39      Bewegungsrichtungen von (22)
40      Bewegungsrichtungen von (22)
41      optische Achse
42      Verstellrichtung von (26, 27)

**Patentansprüche**

1. Verfahren zur Beleuchtung eines transparenten Objekts (1), zur Anwendung in der doppelkonfokalen Rastermikroskopie, wobei zur Beleuchtung eines Punkts des Objekts (1) zwei aus entgegengesetzten Richtungen (2, 3) auf den Punkt fokussierte Lichtwellen einer kohärenten Lichtquelle (4) zu einem Beleuchtungsmuster interferieren, **dadurch gekennzeichnet, dass** mindestens zwei zusätzliche, aufeinander zu laufende, kohärente Lichtwellen ausgekoppelt und derartig überlagert werden, daß die Nebenmaxima (11, 12) des Beleuchtungsmusters minimiert werden.

2. Verfahren nach Anspruch 1, **dadurch gekennzeichnet, dass** die Phasenbeziehung zwischen dem Beleuchtungsmuster und den zusätzlichen Lichtwellen einstellbar ist.

3. Verfahren nach Anspruch 1 oder 2, **dadurch gekennzeichnet, dass** am Ort der Nebenmaxima (11, 12) des ursprünglichen Beleuchtungsmusters die elektromagnetische Feldstärke der überlagerten Beleuchtungsmuster entgegengesetzt ist bzw. unterschiedliche Vorzeichen aufweist.

4. Verfahren nach einem der Ansprüche 1 bis 3, **dadurch gekennzeichnet, dass** die Überlagerung der zusätzlichen kohärenten Lichtwellen durch eine Modulation und/oder Filterung in mindestens einer Fourierebene des Beleuchtungsstrahlengangs erzeugt wird.

5. Verfahren nach Anspruch 4, **dadurch gekennzeichnet, dass** die Modulation und/oder Filterung mit einer Phasen- und/oder Amplitudenplatte erfolgt.

6. Verfahren nach einem der Ansprüche 1 bis 5, **dadurch gekennzeichnet, dass** die Intensität des Lichts zur Erzeugung des ursprünglichen Beleuchtungsmusters und/oder die Intensität der zusätzlich überlagerten Lichtwellen zeitlich moduliert werden.

7. Verfahren nach Anspruch 6, **dadurch gekennzeichnet, dass** die Intensitätsmodulation des Lichts für das ursprüngliche Beleuchtungsmuster zu der Intensitätsmodulation der zusätzlich überlagerten Lichtwellen zeitlich versetzt ist.

8. Verfahren nach einem der Ansprüche 6 oder 7, **dadurch gekennzeichnet, dass** eine Lichtquelle verwendet wird, die gepulstes Licht emittiert.

9. Verfahren nach einem der Ansprüche 6 bis 8, **dadurch gekennzeichnet, dass** die Intensitätsmodulation mit dem Detektorsystem synchronisiert wird.

10. Vorrichtung zur Beleuchtung eines transparenten Objekts (1), zur Anwendung in der doppelkonfokalen Rastermikroskopie, wobei zur Beleuchtung eines Punkts des Objekts (1) zwei aus entgegengesetzten Richtungen auf den Punkt fokussierte Lichtwellen einer kohärenten Lichtquelle zu einem Beleuchtungsmuster interferieren, **dadurch gekennzeichnet, dass** mindestens zwei zusätzliche, aufeinander zu laufende, kohärente Lichtwellen ausgekoppelt werden und derartig überlagerbar sind daß die Nebenmaxima (11, 12) des Beleuchtungsmusters minimiert werden.

11. Vorrichtung nach Anspruch 10, **dadurch gekennzeichnet, dass** die Phasenbeziehung zwischen dem Beleuchtungsmuster und den zusätzlichen Lichtwellen einstellbar ist.

12. Vorrichtung nach Anspruch 10, **dadurch gekennzeichnet, dass** die zusätzlichen kohärenten Lichtwellen durch Strahlaufteilung des von der Lichtquelle emittieren Lichts mit einer optischen Einrichtung (22) erzeugbar ist.

13. Vorrichtung nach Anspruch 12, **dadurch gekennzeichnet, dass** die optische Einrichtung (22) die Strahlaufteilung durch eine Kombination von Transmission und Mehrfachreflexion erzeugt.

14. Vorrichtung nach Anspruch 12, **dadurch gekennzeichnet, dass** die optische Einrichtung im divergent verlaufenden Beleuchtungsstrahlengang angeordnet ist.

15. Vorrichtung nach einem der Ansprüche 12 bis 14, **dadurch gekennzeichnet, dass** zur Einstellung des erforderlichen Intensitätsverhältnisses der einzelnen Lichtwellen die optische Einrichtung (22) eine entsprechende Beschichtung aufweist.

**16.** Vorrichtung nach einem der Ansprüche 12 bis 15, **dadurch gekennzeichnet, dass** die optische Einrichtung (22) ganz und/oder teilweise lateral (40) und/oder axial (39) relativ zum Beleuchtungsstrahlengang verstellbar ist.

## Claims

**1.** Method for illuminating a transparent object (1) for application in double confocal scanning microscopy, in which in order to illuminate a point of the object (1), two light waves of a coherent light source (4) focused from opposite directions (2, 3) onto the point interfere to form an illumination pattern, **characterized in that** at least two additional coherent light waves travelling towards one another are coupled out and superimposed in such a way that the secondary maxima (11, 12) of the illumination pattern are minimized.

**2.** Method according to Claim 1, **characterized in that** the phase relationship between the illumination pattern and the additional light waves can be set.

**3.** Method according to Claim 1 or 2, **characterized in that** at the location of the secondary maxima (11, 12) of the original illumination pattern the electromagnetic field strength of the superimposed illumination patterns is opposed or has different signs.

**4.** Method according to one of Claims 1 to 3, **characterized in that** the superimposition of the additional coherent light waves is produced by modulation and/or filtering in at least one Fourier plane of the illuminating beam path.

**5.** Method according to Claim 4, **characterized in that** the modulation and/or filtering are/is performed with the aid of a phase plate and/or amplitude plate.

**6.** Method according to one of Claims 1 to 5, **characterized in that** the intensity of the light for producing the original illumination pattern and/or the intensity of the additionally superimposed light waves are/is time modulated.

**7.** Method according to Claim 6, **characterized in that** the intensity modulation of the light for the original illumination pattern is temporally offset in relation to the intensity modulation of the additionally superimposed light waves.

**8.** Method according to one of Claims 6 or 7, **characterized in that** use is made of a light source which emits pulsed light.

**9.** Method according to one of Claims 6 to 8, **charac-** terized in that the intensity modulation is synchronized with the detector system.

**10.** Apparatus for illuminating a transparent object (1), for application in double confocal scanning microscopy, in which in order to illuminate a point of the object (1), two light waves of a coherent light source focused from opposite directions onto the point interfere to form an illumination pattern, **characterized in that** at least two additional coherent light waves travelling towards one another are coupled out and can be superimposed in such a way that the secondary maxima (11, 12) of the illumination pattern are minimized.

**11.** Apparatus according to Claim 10, **characterized in that** the phase relationship between the illumination pattern and the additional light waves can be set.

**12.** Apparatus according to Claim 10, **characterized in that** the additional coherent light waves can be generated by using an optical device (22) to split the beams of the light emitted by the light source.

**13.** Apparatus according to Claim 12, **characterized in that** the optical device (22) splits the beams by a combination of transmission and multiple reflection.

**14.** Apparatus according to Claim 12, **characterized in that** the optical device is arranged in the divergently running illuminating beam path.

**15.** Apparatus according to one of Claims 12 to 14, **characterized in that** the optical device (22) has an appropriate coating for the purpose of setting the required intensity ratio of the individual light waves.

**16.** Apparatus according to one of Claims 12 to 15, **characterized in that** the optical device (22) can be adjusted entirely and/or partially in a lateral fashion (40) and/or axial fashion (39) relative to the illuminating beam path.

## Revendications

**1.** Procédé pour éclairer un objet transparent (J), pour une application en microscopie à balayage à double foyer commun, avec lequel pour éclairer un point de l'objet (1), deux ondes lumineuses d'une source de lumière cohérente (4) en provenance de directions opposées (2, 3) et concentrées sur le point interfèrent pour former un modèle d'éclairage, **caractérisé en ce qu'**au moins deux ondes lumineuses cohérentes supplémentaires, se propageant l'une sur l'autre, sont découplées et superposées de manière à ce que les lobes secondaires (11, 12) du modèle d'éclairage soient minimisés.

**2.** Procédé selon la revendication 1, **caractérisé en ce que** la relation de phase entre le modèle d'éclairage et les ondes lumineuses supplémentaires est réglable.

**3.** Procédé selon la revendication 1 ou 2, **caractérisé en ce qu'**à l'endroit des lobes secondaires (11, 12) du modèle d'éclairage d'origine, l'intensité du champ électromagnétique des modèles d'éclairage superposés est inversée ou présente un signe différent.

**4.** Procédé selon l'une des revendications 1 à 3, **caractérisé en ce que** la superposition des ondes lumineuses cohérentes supplémentaires est produite par une modulation et/ou un filtrage dans ou moins un plan de Fourier du trajet du rayon d'éclairage.

**5.** Procédé selon la revendication 4, **caractérisé en ce que** la modulation et/ou le filtrage est effectué avec une lame de phase et/ou d'amplitude.

**6.** Procédé selon l'une des revendications 1 à 5, **caractérisé en ce que** l'intensité de la lumière destinée à générer le modèle d'éclairage d'origine et/ou l'intensité des ondes lumineuses superposées supplémentaires sont modulées dans le temps.

**7.** Procédé selon la revendication 6, **caractérisé en ce que** la modulation de l'intensité de la lumière pour le modèle d'éclairage d'origine est décalée dans le temps par rapport à la modulation de l'intensité des ondes lumineuses superposées supplémentaires.

**8.** Procédé selon l'une des revendications 6 ou 7, **caractérisé en ce que** l'on utilise une source de lumière qui émet de la lumière pulsée.

**9.** Procédé selon l'une des revendications 6 à 8, **caractérisé en ce que** la modulation de l'intensité est synchronisée avec le système de détection.

**10.** Dispositif pour éclairer un objet transparent (1), pour une application en microscopie à balayage à double foyer commun, avec lequel pour éclairer un point de l'objet (1), deux ondes lumineuses d'une source de lumière cohérente en provenance de directions opposées et concentrées sur le point interfèrent pour former un modèle d'éclairage, **caractérisé en ce qu'**au moins deux ondes lumineuses cohérentes supplémentaires, se propageant l'une sur l'autre, sont découplées et peuvent être superposées de manière à ce que les lobes secondaires (11, 12) du modèle d'éclairage soient minimisés.

**11.** Dispositif selon la revendication 1, **caractérisé en ce que** la relation de phase entre le modèle d'éclairage et les ondes lumineuses supplémentaires est réglable.

**12.** Dispositif selon la revendication 10, **caractérisé en ce que** les ondes lumineuses cohérentes supplémentaires peuvent être produites par fractionnement du rayon de la lumière émise par la source de lumière avec un dispositif optique (22).

**13.** Dispositif selon la revendication 12, **caractérisé en ce que** le dispositif optique (22) produit le fractionnement du rayon par une combinaison de transmission et de réflexion multiple.

**14.** Dispositif selon la revendication 12, **caractérisé en ce que** le dispositif optique est disposé dans un trajet de rayon d'éclairage à propagation divergente.

**15.** Dispositif selon l'une des revendications 12 à 14, **caractérisé en ce que** pour régler le rapport d'intensité nécessaire de chacune des ondes lumineuses, le dispositif optique (22) présente un revêtement correspondant.

**16.** Dispositif selon l'une des revendications 12 à 15, **caractérisé en ce que** le dispositif optique (22) peut être positionné totalement et/ou partiellement dans le sens latéral (40) et/ou axial (39) par rapport au trajet du rayon d'éclairage.

Fig. 1

Fig. 2A

Fig. 2B

Fig. 2C

Fig. 2D

Fig. 3

Fig. 4